(19) Europäisches Patentamt
European Patent Office
Office européen des brevets

(11) Veröffentlichungsnummer: **0 209 758 B1**

(12) # EUROPÄISCHE PATENTSCHRIFT

(45) Veröffentlichungstag der Patentschrift: **18.10.89**

(51) Int. Cl.4: **C 10 L 1/32**

(21) Anmeldenummer: **86108824.3**

(22) Anmeldetag: **28.06.86**

(54) **Kraftstoffe und Heizöle und Verwendung eines Emulgatorsystems zur Herstellung dieser Kraftstoffe und Heizöle.**

(30) Priorität: **13.07.85 DE 3525124**

(43) Veröffentlichungstag der Anmeldung:
**28.01.87 Patentblatt 87/5**

(45) Bekanntmachung des Hinweises auf die Patenterteilung:
**18.10.89 Patentblatt 89/42**

(84) Benannte Vertragsstaaten:
**AT BE CH DE FR GB IT LI NL SE**

(56) Entgegenhaltungen:
**EP-A- 0 106 018**
**DE-A- 2 831 100**
**NL-A- 7 612 899**

(73) Patentinhaber: **HÜLS AKTIENGESELLSCHAFT, Patentabteilung / PB 15 - Postfach 13 20, D-4370 Marl 1 (DE)**

(72) Erfinder: **Friedrich, Werner, Tiroler Weg 14, D-4352 Herten (DE)**
Erfinder: **Maag, Hans, Dr., Leverkusener Strasse 29, D-4370 Marl (DE)**
Erfinder: **Riemer, Heinz, Dr., Fritz-Reuter-Strasse 15, D-4250 Bottrop 2 (DE)**

**EP 0 209 758 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft Kraftstoffe für Verbrennungsmotoren und Heizöle für Ölfeuerungsanlagen, in Emulsionsform, die gewisse Anteile an Wasser und Emulgatoren enthalten. Sie betrifft außerdem die Verwendung eines Emulgatorsystems zur Herstellung der Kraftstoffe und Heizöle.

Es ist bereits bekannt, daß Zusätze von Wasser zu Kraftstoffen und Heizölen den Verbrennungsvorgang positiv beeinflussen. Man beobachtet dabei vor allem eine Reduktion der schädlichen Abgasbestandteile, vor allem von Stickoxiden und Ruß (vgl. Chemical Engineering November 11, 1974, page 84-88). Man hat zwar bereits Wasser in den Verbrennungsraum eingedüst, vor allem wurde aber das Wasser direkt in den Kraftstoff bzw. das Heizöl eingebracht. Da Wasser mit Kraftstoffen und Heizölen nicht mischbar ist, hat man mit Hilfe von Emulgatoren Emulsionen gebildet. Dabei wurden bislang ausschließlich nichtionogene Emulgatoren eingesetzt (vgl. DE-OS 1 545 509, DE-OS 1 937 000).

Die mit nichtionogenen Emulgatoren hergestellten Wasser-Treibstoff- bzw. Wasser-Heizöl-Emulsionen sind, falls sie eine ausreichende Stabilität aufweisen, so hochviskos, daß unterhalb + 5 °C die Durchlässigkeit durch Filter und Düsen nicht mehr gegeben ist. Stellt man sie niedrigviskos ein, so zeigen sie eine mangelhafte Stabilität, d.h. die Phasen trennen sich. Gemäß EP-B1-0-012-202 läßt sich die Stabilität von Kraftstoff- und Heizöl-Wasser-Emulsion, welche einen nichtionogenen Emulgator enthalten, durch besondere Reinigungsvorkehrungen verbessern, so daß die Emulgatoren weniger als 1000 ppm Salzanteile, weniger als 1 Gew.-% Polyalkylenlykolether und weniger als 1 Gew.-% Glycerin und/oder Polyglycerin aufweisen. Es ist einleuchtend, daß aufwendige Reinigungsoperationen ein technisches Verfahren belasten.

Es wurde nun überraschenderweise gefunden, daß sich diese Nachteile des Standes der Technik vermeiden lassen bei Kraftstoffen für Verbrennungskraftmaschinen oder Heizölen in Form einer Emulsion, die Wasser, einen Emulgator und ggf. einen Alkohol enthalten, wobei der Emulgator zu wenigstens 25 Gew.-% aus einer oder mehreren Verbindungen der folgenden allgemeinen Formel besteht:

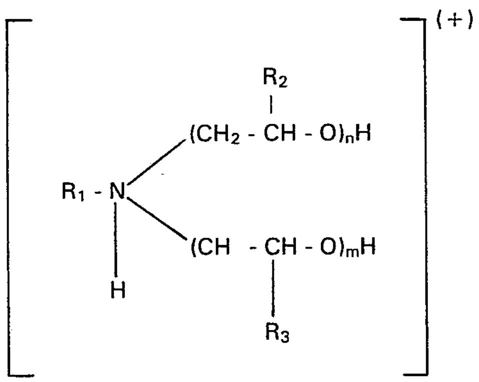

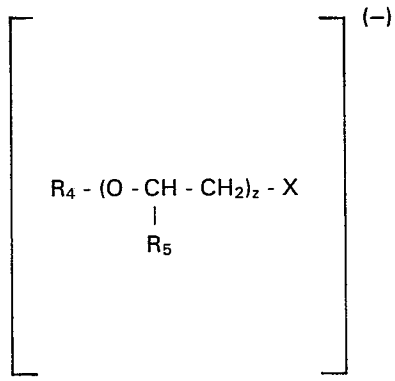

in der

$R_1$ und $R_4$ gesättigte oder ungesättigte, geradkettige oder verzweigte Alkylreste mit 4 bis 24 C-Atomen, $R_4$ auch einen Alkylphenylrest mit 1 bis 18 C-Atomen in der, ggf. verzweigten, Alkylkette oder ein H bedeuten, $R_2$, $R_3$ und $R_5$ eine Methylgruppe oder H darstellen, n und m Zahlenwerte von 0 bis 10 und z Zahlenwerte von 0 bis 15 annehmen können und X einen

Säurerest $-COO^{(-)}$ oder $-OCH_2COO^{(-)}$ bedeuten kann.

Vorzugsweise ist der Emulgator zu 100 Gew.-% eine Verbindung der oben angegebenen allgemeinen Formel.

Zweckmässigerweise beträgt der Wassergehalt 1 bis 20 Gew.-% und der Emulgatorgehalt 0,5 bis 5 Gew.-%, bezogen auf die gesamte Emulsion.

Die Erfindung läßt sich auch darstellen als Verwendung eines Emulgators der allgemeinen Formel:

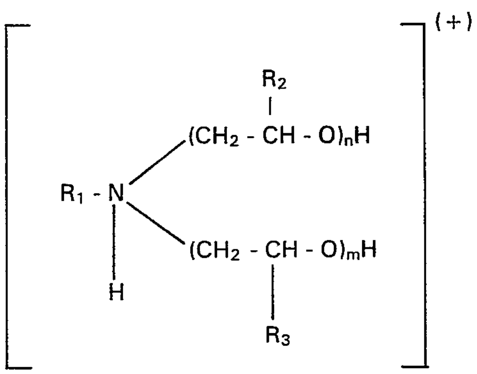

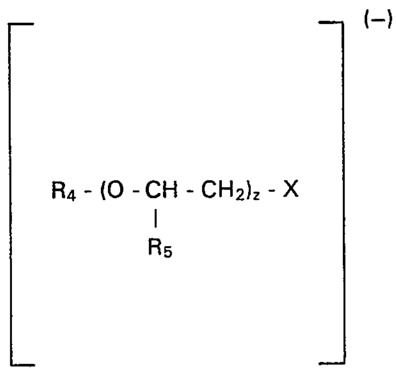

in der

$R_1$ und $R_4$ gesättigte oder ungesättigte, geradkettige oder verzweigte Alkylreste mit 4 bis 24 C-Atomen, $R_4$ auch einen Alkylphenylrest mit 1 bis 18 C-Atomen in der, ggf. verzweigten, Alkylkette oder ein H bedeuten, $R_2$, $R_3$ und $R_5$ eine Methylgruppe oder H darstellen, n und m Zahlenwerte von 0 bis 10 und z Zahlenwerte von 0 bis 15 annehmen können, und X einen

Säurerest $-COO^{(-)}$ oder $-O-CH_2-COO^{(-)}$

bedeuten kann,

zur Herstellung von Kraftstoffen für Verbrennungskraftmaschinen oder Heizölen in Form einer Emulsion, die Wasser, einen oder mehrere Emulgatoren und ggf. einen Alkohol enthalten.

Vorzugsweise wird ausschließlich ein Emulgator dieser allgemeinen Formel eingesetzt.

Zweckmäßigerweise besteht der Emulgatorgehalt des Kraftstoffes oder des Heizöles zu wenigstens 25 Gew.-%, vorzugsweise 50 Gew.-% aus einer Verbindung der angegebenen Formel.

Als Emulgatoren für Kraftstoff- und Heizöl-Wasser-Emulsionen wurden in der Fachliteratur bislang ausschließlich nichtionogene Verbindungen beschrieben, vgl. oben. In der o.a. EP-B1 wurde sogar darauf abgehoben, die nichtionogenen Emulgatoren müßten auch von Spuren von Salzen befreit werden, um eine Trennung der Emulsionen zu verhindern.

Völlig überraschend ist es daher, daß die erfindungsgemäßen außerordentlich stabilen Kraftstoff- und Heizöl-Wasser-Emulsionen Emulgatoren enthalten, welche ihrem Verbindungstyp nach Salze sind. Die außerordentliche Stabilität der erfindungsgemäßen Emulsionen (Wasser-in-Öl-Emulsionen) läßt sich aus ihrer Teilchengröße und ihrer äußeren Erscheinung sofort ersehen: Da die Teilchengröße deutlich unter 100 Nm liegt und zudem die Emulsionen fast durchsichtig sind, liegen Mikroemulsionen vor. Bekanntlich beginnt der Mikroemulsionsbereich bei einer Teilchengröße unterhalb 100 Nm (vgl. auch Lissant, Mikroemulsions, Verlag Marcel Dekkar, Inc. New York und Basel 1984). Wie der Fachmann weiß, zeichnen sich Mikroemulsionen durch eine außerordentlich hohe Stabilität aus, da sie einen energetisch günstigen Zustand darstellen (vgl. Stache, Tensid-Taschenbuch, Carl Hanser Verlag München, 2. Ausgabe 1981).

Ein weiterer überraschender Vorteil der erfindungsgemäßen Emulsionen besteht darin, daß sie von dünnflüssiger bis höchstens leichtviskoser Beschaffenheit sind und sich somit beispielsweise auch in Kraftfahrzeugen für den Winterbetrieb hervorragend eignen. Es wurde zwar bereits über die Herstellung von Mikroemulsionen aus Treibstoff und Wasser berichtet (US-PS 4 046 519), Versuche haben jedoch gezeigt, daß auf die dort beschriebene Weise Mikroemulsionen nicht entstehen können (Vergleichsversuch 2).

Es ist nicht unbedingt erforderlich, die erfindungsgemäß zu verwendenden Emulgatoren ausschließlich einzusetzen; es werden auch bereits gute Ergebnisse erzielt, wenn wenigstens 25 Gew.-% des Gesamtemulgatorgehaltes an erfindungsgemäß einzusetzendem salzartigem Emulgator vorliegen (vgl. Beispiel 6).

Übliche Emulgatoren, wie sie gemeinsam mit den erfindungsgemäß zu verwendenden Emulgatoren eingesetzt werden können, sind vor allem nichtionogene Verbindungstypen wie Alkylpolyglykolether, Alkylarylpolyglykolether, Carbonsäurepolyglykolester, Alkylaminpolyglykolether und Carbonsäureamidpolyglykolether. Es seien beispielsweise genannt die 1 bis 30 Mol Ethylenoxid und/oder Propylenoxid enthaltenden Oxiethylierungsprodukte von Alkoholen mit 8 bis 22 C-Atomen, von Alkylglykolen-1,2, von Fettsäuren, von Fettsäureamid, von Fettaminen, von synthetischen Fettsäuren, von Naphthensäuren, von Harzsäuren, von Alkylphenolen, von Aralkylphenolen oder von Veresterungsprodukten von Fettsäuren mit Glycerin, oder von Polyalkoholen.

Die nichtionogenen Emulgatoren werden beispielsweise erhalten durch Umsetzung von 2 bis 50 Mol Ethylenoxid oder Ethylenoxid und Propylenoxid mit (a) einem Alkohol mit 8 bis 22 C-Atomen, der geradkettig oder verzweigt, gesättigt oder ungesättigt sein kann, mit (b) einem Alkylglykol-1,2 mit 10 bis 22 C-Atomen, mit (c) einer Fettsäure mit 10 bis 22 C-Atomen, die gesättigt oder ungesättigt, geradkettig oder verzweigt sein kann, mit (d) Harzsäuren oder Napthensäuren mit (e) einem Alkylphenol, wie Nonyl- oder Dodecylphenol oder Aralkylphenolen oder mit (f) Fetten, wie Rizinusöl, Kokosfett, Palmöl, Talgfett oder Schweinefett, Sonnenblumenöl, Saflöröl, Olivenöl.

Erfindungsgemäß einzusetzende Emulgatoren sind beispielsweise Salze aus einem Alkylamin, mit einer, ggf. ungesättigten, oder verzweigten Alkylkette, mit 4 bis 24 C-Atomen, welches ggf. 1 bis 20 Polyglykolethergruppen von Ethylenoxid- und/oder Propylenoxideinheiten enthalten kann, und einer säuregruppenhaltigen Verbindung wie einer, ggf. ungesättigten oder verzweigten, Carbonsäure mit 4 bis 24 C-Atomen, einer Alkyl- bzw. Alkylarylpolyglykoletheressigsäure mit einer 4 bis 24 C-Atome enthaltenden Alkylgruppe oder einer 4 bis 12 C-Atome im Alkylrest enthaltenden Alkylarylgruppe und einer Polyglykolethergruppe mit 1 bis 15 Ethylenoxid und/oder Propylenoxideinheiten.

Erfindungsgemäss geeignet sind Emulgatoren, die sich ableiten von Aminen wie z.B. Butylamin, Pentylamin, Hexylamin, Heptylamin, Octylamin, Nonylamin, Decylamin, Undecylamin, Laurylamin, Tridecylamin, Tetradecylamin, Pentadecylamin, Palmitylamin, Stearylamin, Aralkylamin, Biphenylamin, Lignocerylamin, ebenso wie von ungesättigten und verzweigten Aminen, gleicher C-Zahl, z.B. Oleylamin, 2-Ethylhexylamin, oder handelsüblichen oder sonstigen Gemischen wie Kokosfettamin, Talgfettamin. Diese Amine können als solche bereits mit Säuren umgesetzt werden, oder aber es erfolgt zuvor eine Umsetzung mit 1 bis 20 Molen, vorzugsweise 4 bis 8 Molen Ethylenoxid und/oder Propylenoxid, insbesondere 4 bis 8 Molen Ethylenoxid. Es erfolgt sodann eine Umsetzung mit einer Säure. Als Säuren können herangezogen werden: Carbonsäuren mit 4 bis 24 C-Atomen wie Buttersäure, Valeriansäure, Capronsäure, Heptylsäure, Caprylsäure, Nonylsäure, Caprinsäure, Undecylsäure, Laurinsäure, Tridecylsäure, Myristylsäure, Pentadecylsäure, Palmitinsäure, Stearinsäure, Arachinsäure, Behensäure, Lignocerinsäure, sowie die verzweigten und ungesättigten Typen gleicher C-Zahlen, wie Palmitoleinsäure, Ölsäure, Gadoleinsäure etc. Es können auch eingesetzt werden Alkylpolyglykoletheressigsäuren mit 4 bis 24 C-Atomen im, ggf. ungesättigten oder verzweigten, Alkylrest welche sich von ggf. ungesättigten oder verzweigten Alkoholen ableiten. Als solche Alkohole kommen in Frage: Butanol, Pentanol, Hexanol, Heptanol, Octanol, Nonanol, Decanol, Undecanol, Laurylalkohol, Tridecanol, Tetradecanol, Pentadecanol, Hexadecanol, Heptadecanol, Octadecanol, Eicosylalkohol, Behenylalkohol, Lignocerylalkohol, sowie die entsprechenden verzweigten oder ungesättigten Typen gleicher C-Zahl wie Isooctanol, Oleylalkohol, etc. Es kommen auch in Frage Alkylphenylpolyglykoletheressigsäuren, die sich von Alkylphenolen mit 4 bis 12 C-Atomen in der Alkylkette ableiten, wie z.B. Butylphenol, Pentylphenol, Hexylphenol, Heptylphenol, Octylphenol, Nonylphenol, Decylphenol, Undecylphenol, Dodecylphenol. Diese Alkohole und Phenole werden mit 1 bis 10, vorzugsweise 4 bis 8 Molen Ethylenoxid und/oder Propylenoxid umgesetzt. Insbesondere werden sie mit 4 bis 8 Molen Ethylenoxid umgesetzt. Die entstandenen Alkylpolyetheralkohole können nun in üblicher Weise zum Alkylpolyethercarboxylmethylat umgesetzt werden, z.B. durch Reaktion mit Chloressigsäure bzw. Chloracetat (vgl. z.B. EP-A1-0 106 018) oder auch durch Oxydation.

Ferner lassen sich als Säuren einsetzen Alkylbenzolcarbonsäuren mit 4 bis 12 C-Atomen in der ggf. verzweigten Alkylkette, wie Butyl-, Pentyl-, Hexyl-, Heptyl-, Octyl-, Nonyl-, Decyl-, Undecyl- und Dodecylbenzolcarbonsäuren. Die Salze, d.h. die erfindungsgemäß einzusetzenden Emulgatoren, können hergestellt werden, indem man das Amin mit der Säure in der Kälte, d.h. bei Raumtemperatur mischt.

Als Kraftstoffe können eingesetzt werden: alle handelsüblichen Normal- und Superkraftstoffe, auch bleifrei, und Dieselkraftstoffe, auch Schweröle.

Als Heizöle kommen in Frage: alle Leicht-, Mittel- und Schweröle, auch Rohöle wie z.B. Schieferöl, die für Ölfeuerungsanlagen geeignet sind.

Bei Betrieb unterhalb 0°C empfiehlt es sich, der Wasser-Kraftstoff-Emulsion gefrierpunktserniedrigende Substanzen wie z.B. einwertige Alkohole zuzusetzen. Beispiele sind Methanol, Ethanol, Propanol, Isopropanol, Butanol, Isobutanol, 2-Ethylhexanol.

Die erfindungsgemäßen Kraftstoff-Emulsionen enthalten beispielsweise:

| | | |
|---|---|---|
| 50 | bis 97 | Gew.-% Benzin oder Dieselöl |
| 0,5 | bis 35 | Gew.-% Wasser |
| 0,3 | bis 6 | Gew.-% des erfindungsgemäß als Emulgator einzusetzenden Salzes |
| 0 | bis 15 | Gew.-% eines Alkohols |

wobei sich die Gew.-% auf 100 addieren.

Die erfindungsgemäßen Heizöl-Emulsionen enthalten beispielsweise:

| | | |
|---|---|---|
| 50 | bis 97 | Gew.-% Heizöl |
| 0,5 | bis 35 | Gew.-% Wasser |
| 0,3 | bis 6,0 | Gew.-% des erfindungsgemäß als Emulgator einzusetzenden Salzes |

Die erfindungsgemäßen Kraftstoff- bzw. Heizöl-Emulsionen werden hergestellt durch Vermischen der Komponenten, z.B. Einrühren von Wasser in die Lösung aus Emulgator und Treibstoff bzw. Heizöl. Die beschriebenen Wasser-in-Öl-Emulsionen entstehen ohne Anwendung zusätzlicher Scherkräfte. Die Erfindung wird weiterhin erläutert durch die folgenden Beispiele und Vergleichsbeispiele:

*Beispiel 1*

87,5 ml Dieselkraftstoff werden mit
2,5 ml eines Umsetzungsproduktes aus 1 Mol Oleylamin mit 6,2 Mol Ethylenoxid und 1 Mol Ölsäure gemischt und anschließend unter Rühren mit
10,0 ml entmineralisiertem Wasser in Portionen von ca. 1 ml versetzt. Nach kurzer Zeit bildet sich eine äußerst stabile, dünnflüssige, fast durchsichtige, grau-blaue Wasser-in-Öl-Emulsion mit einer elektrischen Leitfähigkeit von 1,3 10-3 $\mu S \cdot cm^{-1}$ und Teilchendurchmessern von 32-35 Nm. Die dynamische Viskosität beträgt 4,7 mPa·s bei 20°C (dünnflüssig) und 27,8 mPa·s bei 0°C (leicht viskos).
Eine vergleichbare Emulsion erhält man, wenn anstelle des Umsetzungsproduktes aus 1 Mol Oleylamin mit 6,2 Mol Ethylenoxid und 1 Mol Ölsäure, ein solches aus 1 Mol Oleylamin mit 1 Mol Propylenoxid sowie 6,0 Mol Ethylenoxid und 1 Mol Ölsäure verwendet wird.

*Beispiel 2*

84,5 ml Dieselkraftstoff werden mit
3,0 ml Ethylalkohol sowie
2,5 ml eines Umsetzungsproduktes aus 1 Mol Oleylamin mit 5,6 Mol Ethylenoxid und 1 Mol Ölsäure gemischt und anschließend unter Rühren mit
10,0 ml entmineralisiertem Wasser in Portionen von ca. 1 ml versetzt. Nach kurzer Zeit bildet sich eine äußerst stabile, dünnflüssige, fast durchsichtige, grau-blaue Wasser-in-Öl-Emulsion mit einer dynamischen Viskosität von 4,7 mPa·s bei 20°C, 14,4 mPa·s bei 0°C und 27,4 mPa·s bei −10°C (leicht viskos). Diese Emulsion eignet sich besonders als Dieselkraftstoff auch in Winterbetrieb.

*Beispiel 3*

84,5 ml Dieselkraftstoff werden mit
3,0 ml Ethylalkohol sowie
2,5 ml eines Umsetzungsproduktes aus 1 Mol i-Nonylphenolpolyglykoletheressigsäure mit 6,0 EO-Einheiten und 1 Mol Talgfettamin $C_{16-18}$ gemischt und anschließend unter Rühren mit
10,0 ml entmineralisiertem Wasser in Portionen von ca. 1 ml versetzt. Nach kurzer Zeit bildet sich eine Emulsion, die äußerlich und

anwendungstechnisch der im Beispiel 2 beschriebenen gleichwertig ist.

*Beispiel 4*

87,5 ml Normalbenzin werden mit
2,5 ml eines Umsetzungsproduktes aus 1 Mol Oleylamin mit 6,3 EO-Einheiten und 1 Mol Ölsäure gemischt und unter Rühren mit
10,0 ml entmineralisiertem Wasser in Portionen von ca. 1 ml versetzt. Nach kurzer Zeit bildet sich eine äußerst stabile, dünnflüssige, fast durchsichtige, grau-blaue Wasser-in-Öl-Emulsion mit einer dynamischen Viskosität von 3,2 mPa·s bei 20°C und Teilchendurchmessern von 33-35 Nm.

*Beispiel 5*

93,5 ml handelsübliches Heizöl mit
1,5 ml eines Umsetzungsproduktes aus 1 Mol Oleylamin mit 6,1 EO-Einheiten und 1 Mol Kokosfettsäure $C_{8-18}$ vermischt und unter Rühren mit
5,0 ml entmineralisiertem Wasser versetzt. Es bildet sich nach kurzem Verrühren eine fast klare, äußerst stabile W/O-Emulsion (34 bis 36 Nm Teilchengröße, 7,5 mPa·s bei 20°C).

*Vergleichsversuch 1 und Beispiel 6*

81,8 ml handelsübliches Heizöl werden mit
2,0 ml Laurylalkoholoxethylat (5 EO/Mol) versetzt und unter Rühren
15,0 ml entmineralisiertes Wasser in Portionen von ca. 1 ml hinzugefügt. Es bildet sich eine viskose milchig-weiße Emulsion mit einer dynamischen Viskosität von 100 mPa·s bei 20°C (dickflüssig). Diese Emulsion ist bei Winterbetrieb nicht mehr einsetzbar und zeigt bereits nach 24 h Standzeit erste Trennerscheinungen: ca. 1 ml Wasser als klare untere Phase und ca. 5 ml klare obere Heizölphase.
Versetzt man diese Emulsion mit zusätzlich
1,2 ml eines Umsetzungsproduktes aus 1 Mol Talgfettamin $C_{16-18}$ mit 4 Ethylenoxideinheiten und 1 Mol Tallölfettsäure mit einem Harzsäuregehalt von < 2%, so ändert sie spontan ihr Aussehen. Es entsteht eine äußerst stabile, dünnflüssige, fast durchsichtige, grau-blaue W/O-Emulsion, mit einer dynamischen Viskosität von 6,0 mPa·s bei 20°C.

Vergleichbare Ergebnisse werden erzielt, wenn anstelle des Laurylalkoholethylats (5 EO/Mol) ein i-Nonylphenoloxethylat mit 5,2 EO/Mol eingesetzt wird.

*Vergleichsversuch 2*

2,25 g eines Mono- und Diesters aus Glycerin und Ölsäure, der z.B. durch Kondensation von 1 Mol Glycerin und 1,5 Molen Ölsäure (Olein) hergestellt werden kann und
0,25 g Bis-(2-hydroxylethyl)stearylamin (Gew.-Verhältnis = 9 : 1) werden in
87,5 ml Dieselkraftstoff gelöst und unter Rühren mit
10,0 ml entmineralisiertem Wasser in Portionen von ca. 1 ml versetzt. Es bildet sich eine grau-weiße Emulsion, die schon nach wenigen Stunden Standzeit in zwei Phasen zerfällt. Auch die Mitverwendung von bis zu 19 Teilen Methanol und Änderung der Gew.-Verhältnisse der beiden Emulgatorkomponenten bewirken keine spürbare Verbesserung der Emulsionsstabilität. Die gleichen Ergebnisse werden erzielt, wenn anstelle des Dieselkraftstoffes z.B. ein handelsüblicher Normal- oder Superkraftstoff verwendet wird.

*Beispiel 7*

87,5 ml Superkraftstoff, bleifrei, werden mit
2,5 ml eines Umsetzungsproduktes aus 1 Mol Laurylamin mit 2,5 Mol Ethylenoxid und 1 Mol Laurylalkoholpolyglykoletheressigsäure mit 2,0 EO-Einheiten gemischt und anschließend unter Rühren mit
10,0 ml entmineralisiertem Wasser in Portionen von ca. 1 ml versetzt. Nach kurzer Zeit bildet sich eine äußerst stabile, dünnflüssige, fast durchsichtige, grau-blaue Wasser-in-Öl-Emulsion mit einer dynamischen Viskosität von 3,1 mPa·s bei 20°C und Teilchendurchmessern von 32-34 Nm.

**Patentansprüche**

1. Kraftstoffe für Verbrennungskraftmaschinen oder Heizöle in Form einer Emulsion, die Wasser, einen Emulgator und ggf. einen Alkohol enthalten, dadurch gekennzeichnet, daß der Emulgator zu wenigstens 25 Gew.-% aus einer oder mehreren Verbindungen der folgenden allgemeinen Formel besteht:

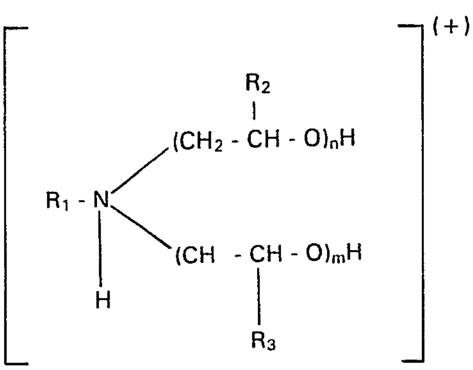

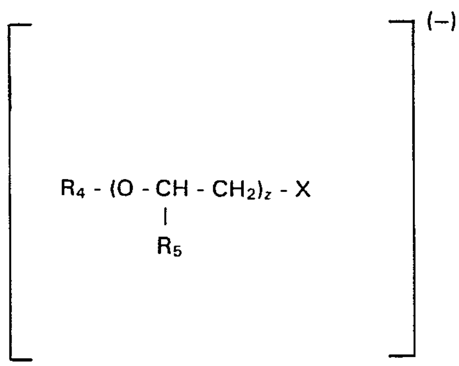

in der

$R_1$ und $R_4$ gesättigte oder ungesättigte, geradkettige oder verzweigte Alkylreste mit 4 bis 24 C-Atomen, $R_4$ auch einen Alkylphenylrest mit 1 bis 18 C-Atomen in der, ggf. verzweigten, Alkylkette oder ein H bedeuten, $R_2$, $R_3$ und $R_5$ eine Methylgruppe oder H darstellen, n und m Zahlenwerte von 0 bis 10 und z Zahlenwerte von 0 bis 15 annehmen können und X einen

Säurerest $-COO^{(-)}$ oder $-OCH_2COO^{(-)}$
bedeuten kann.

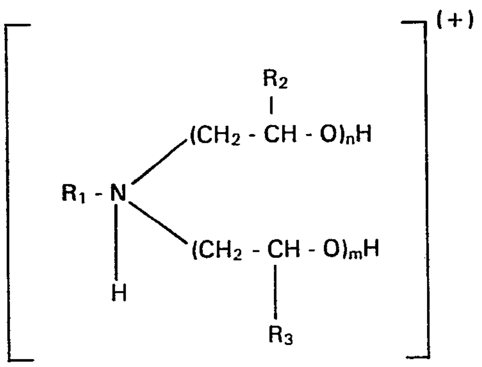

in der

$R_1$ und $R_4$ gesättigte oder ungesättigte, geradkettige oder verzweigte Alkylreste mit 4 bis 24 C-Atomen, $R_4$ auch einen Alkylphenylrest mit 1 bis 18 C-Atomen in der, ggf. verzweigten, Alkylkette oder ein H bedeuten, $R_2$, $R_3$ und $R_5$ eine Methylgruppe oder H darstellen, n und m Zahlenwerte von 0 bis 10 und z Zahlenwerte von 0 bis 15 annehmen können und X einen

Säurerest $-COO^{(-)}$ oder $-O-CH_2COO^{(-)}$

bedeuten kann,

zur Herstellung von Kraftstoffen für Verbrennungs-Kraftmaschinen oder Heizölen in Form einer Emulsion, die Wasser, einen oder mehrere Emulgatoren und ggf. einen Alkohol enthalten.

5. Verwendung eines Emulgators nach Anspruch 4, dadurch gekennzeichnet, daß ein Emulgator dieser allgemeinen Formel eingesetzt wird.

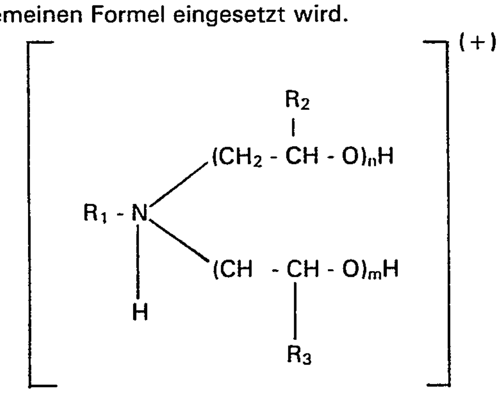

wherein $R_1$ and $R_4$ denote saturated or unsaturated, straight-chain or branched alkyl radicals having 4 to 24 C atoms, and $R_4$ also denotes an alkylphenyl radical having 1 to 18 C atoms in the alkyl chain, which may be branched, or an H, $R_2$, $R_3$ and $R_5$ represent a methyl group or H, n and m can assume numerical values from 0 to 10 and z can assume numerical values from 0 to 15, and X can denote an acid radical $-COO^{(-)}$ or $-OCH_2COO^{(-)}$.

2. Kraftstoffe oder Heizöle nach Anspruch 1, dadurch gekennzeichnet, daß der Emulgator zu 100 Gew.-% eine Verbindung der oben angegebenen allgemeinen Formel ist.

3. Kraftstoffe oder Heizöle nach Anspruch 1 oder 2, dadurch gekennzeichnet, daß der Wassergehalt 0,5 bis 35 Gew.-% und der Emulgatorgehalt 0,3 bis 6 Gew.-%, bezogen auf die gesamte Emulsion, beträgt.

4. Verwendung eines Emulgators der allgemeinen Formel:

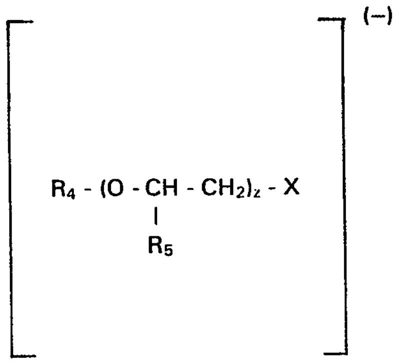

6. Verwendung eines Emulgators nach den Ansprüchen 4 und 5, dadurch gekennzeichnet, daß der Emulgatorgehalt des Kraftstoffes oder des Heizöls zu wenigstens 25 Gew.-% aus einer Verbindung der angegebenen allgemeinen Formel besteht.

7. Kraftstoffe für Verbrennungsmaschinen oder Heizöle in Form einer Emulsion nach einem der Ansprüche 1 bis 3, dadurch gekennzeichnet, daß sie 8 bis 15 Gew.-% Wasser enthalten.

## Claims

1. A motor fuel for an internal combustion engine or a fuel oil in the form of an emulsion, containing water, an emulsifier and, if desired, an alcohol, characterized in that the emulsifier is composed to the extent of at least 25% by weight of one or more compounds of the following general formula:

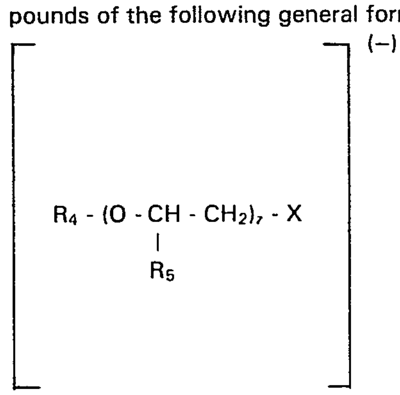

2. A motor fuel or fuel oil according to claim 1, characterized in that the emulsifier is to the extent of 100% by weight a compound of the general formula given above.

3. A motor fuel of fuel oil according to claim 1 or 2, characterized in that the water content is 0.5 to 35% by weight and the emulsifier content is 0.3 to 6% by weight, relative to the total emulsion.

4. Use of an emulsifier of the general formula:

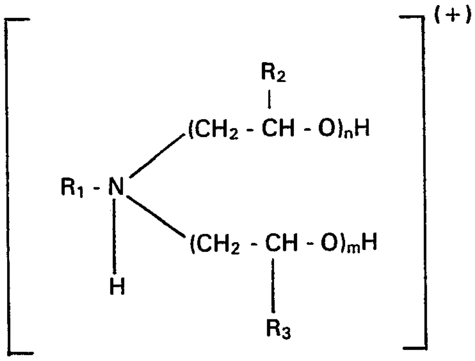

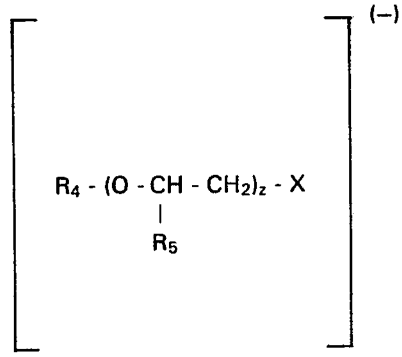

wherein $R_1$ and $R_4$ denote saturated or unsaturated, straight-chain or branched alkyl radicals having 4 to 24 C atoms, and $R_4$ also denotes an alkylphenyl radical having 1 to 18 C atoms in the alkyl chain, which may be branched, or an H, $R_2$, $R_3$ and $R_5$ represent a methyl group or H, n and m can assume numerical values from 0 to 10 and z can assume numerical values from 0 to 15, and X can denote an acid radical

$-COO^{(-)}$ or $-O-CH_2COO^{(-)}$,

for the production of a motor fuel for an internal combustion engine or of a fuel oil in the form of an emulsion containing water, one or more emulsifiers and, if desired, an alcohol.

5. Use of an emulsifier according to claim 4, characterized in that exclusively an emulsifier of this general formula is used.

6. Use of an emulsifier according to claim 4 or 5, characterized in that the emulsifier content of the motor fuel or fuel oil is composed to the extent of at least 25% by weight of a compound of the indicated general formula.

7. A motor fuel or an internal combustion engine or a fuel oil in the form of an emulsion according to any of claims 1 to 3, characterized in that it contains 8 to 15% by weight of water.

**Revendications**

1. Carburants pour moteurs à combustion ou huiles de chauffe sous forme d'une émulsion renfermant de l'eau, un émulsifiant et éventuellement un alcool, caractérisés par le fait que l'émulsifiant est constitué, pour 25% en poids au moins, par un ou plusieurs composés de la formule générale suivante:

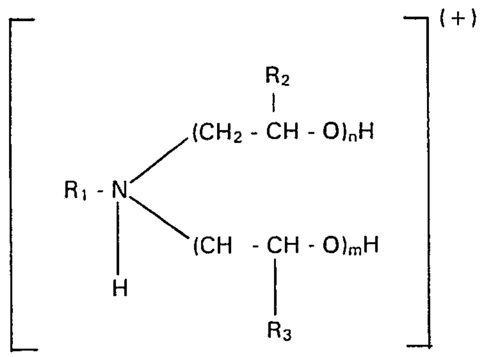

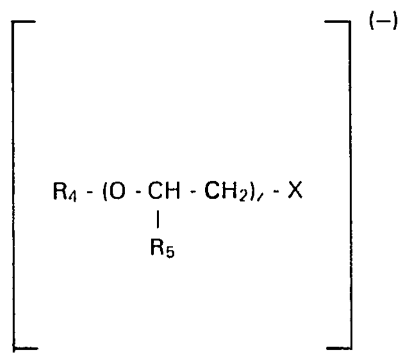

dans laquelle $R_1$ et $R_4$ représentent des radicaux alkyle saturés ou non-saturés, linéaires ou ramifiés, comportant de 4 à 24 atomes de carbone, $R_4$ pouvant également représenter un reste alkyl-phényle comportant de 1 à 18 atomes de carbone dans la chaîne alkylique éventuellement ramifiée, ou bien un hydrogène, $R_2$, $R_3$ et $R_5$ représentent un groupe méthyle ou de l'hydrogène, n et m sont nombres d'une valeur de zéro à 10 et z est un nombre pouvant prendre une valeur de zéro à 15, et X peut représenter un reste acide

$-COO^{(-)}$ ou $-OCH_2COO^{(-)}$.

2. Carburants ou huiles de chauffe selon la revendication 1, caractérisés par le fait que l'émulsifiant est à 100% en poids un composé de la formule générale indiquée ci-dessus.

3. Les carburants ou huiles de chauffe selon la revendication 1 ou 2, caractérisés par le fait que la teneur en eau est de 0,5 à 35% en poids et la teneur en émulsifiant de 0,3 à 6% en poids, relativement à l'émulsion globale.

4. L'utilisation, pour la préparation de carburants pour moteurs à combustion ou d'huiles de chauffe sous forme d'une émulsion, qui renferment de l'eau, un ou plusieurs émulsifiants, et éventuellement un alcool, d'un émulsifiant de la formule générale

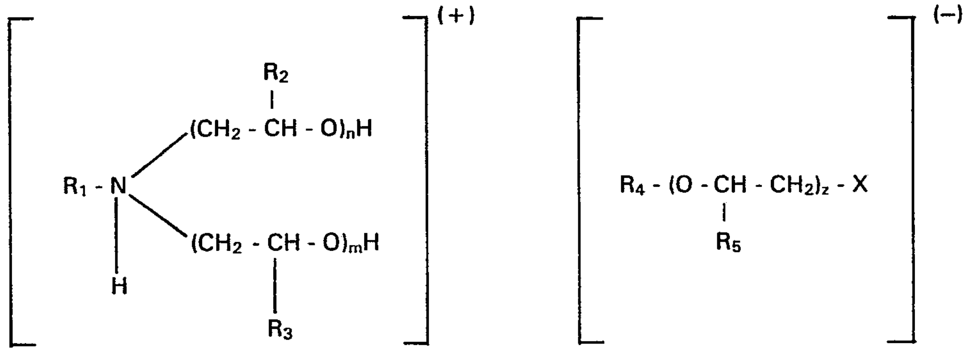

dans laquelle $R_1$ et $R_4$ représentent des radicaux alkyle saturés ou non-saturés, linéaires ou ramifiés, comportant de 4 à 24 atomes de carbone, $R_4$ pouvant également représenter un radical alkyl-phényle comportant de 1 à 18 atomes de carbone dans la chaîne alkylique éventuellement ramifiée, ou bien un hydrogène, $R_2$, $R_3$ et $R_5$ représentent un groupe méthyle ou de l'hydrogène, n et m sont nombres d'une valeur de zéro à 10 et z est un nombre pouvant prendre une valeur de zéro à 15, et X peut représenter un reste acide

$-COO^{(-)}$ ou $-O-CH_2COO^{(-)}$.

5. L'utilisation d'un émulsifiant selon la revendication 4, caractérisée par le fait que l'on utilise exclusivement un émulsifiant de cette formule générale.

6. L'utilisation d'un émulsifiant selon les revendications 4 et 5, caractérisée par le fait que la teneur en émulsifiant du carburant ou de l'huile de chauffe est constituée pour 25% en poids au moins par un composé de la formule générale indiquée.

7. Carburants pour machines à combustion ou huiles de chauffe sous la forme d'une émulsion selon l'une des revendications 1 à 3, caractérisés par le fait qu'ils renferment de 8 à 15% en poids d'eau.